# EUROPÄISCHE PATENTSCHRIFT

(11) **EP 2 190 669 B1**
(45) Veröffentlichungstag und Bekanntmachung des Hinweises auf die Patenterteilung: **27.04.2011**
(21) Anmeldenummer: 08785797.5
(22) Anmeldetag: 03.09.2008
(51) Int. Cl.: B41F 13/42

(54) **DRUCKMASCHINE**
PRINTING MACHINE
PRESSE

(30) Priorität: 05.09.2007 DE 102007042151
(43) Veröffentlichungstag der Anmeldung: 02.06.2010
(73) Patentinhaber: Manroland AG, 63075 Offenbach am Main (DE)
(72) Erfinder: HAMMER, Josef, 08525 Plauen (DE)
(74) Vertreter: Epp, Matthias Heinz
(86) Internationale Anmeldenummer: PCT/EP2008/007185
(87) Internationale Veröffentlichungsnummer: WO 2009/030465

(56) Entgegenhaltungen:
- EP-A- 0 023 433
- EP-A- 1 041 023
- EP-A- 1 445 099
- DE-B3- 10 360 283

## Beschreibung

Die Erfindung betrifft eine Druckmaschine mit einer Optosensor-Einrichtung zum Überwachen des Betriebs der Druckmaschine, und insbesondere eine Druckmaschine deren Optosensor-Einrichtung über Mittel zum Sauberhalten eines optischen Sensors der Optosensor-Einrichtung verfügt.

An Druckmaschinen, wie z.B. Rotationsdruckmaschinen, sind üblicherweise diverse Überwachungseinrichtungen vorgesehen, die den Betrieb der Druckmaschine überwachen sollen. Bei beispielsweise Rollenrotationsdruckmaschinen können solche Überwachungseinrichtungen z.B. zum Überwachen der Bahnführung der Bedruckstoffbahn, als Drehzahlwächter an den Druckzylindern oder zum Erfassen von Druckprodukten an der Auslage eines Falzapparates der Druckmaschine vorgesehen sein.

Für die Fälle, in denen die Bedruckstoffbahn (z.B. deren Lage in der Druckmaschine) bzw. Druckprodukte (z.B. deren Anzahl) zu überwachen und/oder zu erfassen sind, eignen sich insbesondere Optosensor-Einrichtungen mit optischen Sensoren.

Optische Sensoren in dem zuvor genannten Sinne können beispielsweise mit optoelektrischen bzw. optoelektronischen Bauelementen, wie beispielsweise Halbleiterbauelementen (wie z.B. Photodioden, Photowiderstände, Laserdioden und Phototransistoren usw.) oder Photozellen, ausgerüstete Einheiten sein, wie beispielsweise Digitalkameras, Reflexlichttaster, Reflexlichtschranken usw.

Aus der EP 1 445 099 A1 ist eine Vorrichtung mit mehreren optischen Sensoreinheiten umfassend Beleuchtungsmittel, Digitalkamera, Spiegel und digitaler Signalverarbeitung bekannt, die in einem Gehäuse eingebracht ist und für die Überwachung von Bogendruckmaschinen verwendet wird. Die DE 103 60 283 B3 beschreibt eine Vorrichtung zum Beobachten von in mit Staub, Feuchtigkeit und dgl. verschmutzten Räumen angeordneten Gegenständen bzw. in diesen Räumen ablaufenden Vorgängen.

Optische Sensoren haben jedoch den Nachteil, dass ein sensorischer Bereich zum Erfassen einer Messgröße, d.h. ein Bereich in dem sichtbares bzw. nichtsichtbares Licht oder Strahlung aus dem Sensor austreten und/oder in den Sensor eintreten kann, in einer Druckmaschine schnell verschmutzt. Mit anderen Worten verschmutzen optische Sensoren durch die Umgebungsbedingungen in einer Druckmaschine durch Farbe, Flüssigkeiten oder Papierstaub und müssen regelmäßig gewartet werden, um deren Funktion sicher zu stellen.

Bekannt sind in diesem Zusammenhang turnusmäßiges automatisiertes Abwischen oder Abblasen der Optik bzw. des sensorischen Bereichs des optischen Sensors. Eine dauerhafte Funktion der Optosensor-Einrichtung kann durch diese Methoden jedoch nicht gewährleistet werden, da durch Aerosole oder Öl die Optik bzw. der sensorische Bereich des optischen Sensors nicht sauber bleibt, wodurch die Druckmaschine anfällig für Funktionsstörungen ist.

Der Erfindung liegt die Aufgabe zugrunde, eine Druckmaschine mit einer Optosensor-Einrichtung zum Überwachen des Betriebs der Druckmaschine bereitzustellen, wobei die Optosensor-Einrichtung derart eingerichtet ist, dass der sensorische Bereich eines optischen Sensors der Optosensor-Einrichtung zuverlässig sauber gehalten wird, so dass die Wahrscheinlichkeit für Funktionsstörungen an der Druckmaschine vermindert ist.

Dies wird mit einer Druckmaschine gemäß Anspruch 1 erreicht. Weiterbildungen der Erfindung sind in den abhängigen Ansprüchen beschrieben.

In diesem Zusammenhang ist der Begriff "sauber" so zu verstehen, dass der sensorische Bereich des optischen Sensors von jeglicher Verschmutzung freigehalten wird, welche die betriebssichere Funktion der Optosensor-Einrichtung und damit der Druckmaschine beeinträchtigen könnte. Mit anderen Worten soll gewährleistet werden, dass der optische Sensor stets freie Sicht auf eine jeweils abzutastende Stelle hat.

Gemäß der Erfindung wird eine Druckmaschine mit einer Optosensor-Einrichtung zum Überwachen des Betriebs der Druckmaschine bereitgestellt, wobei die Optosensor-Einrichtung aufweist: einen optischen Sensor mit einem sensorischen Bereich zum Passieren von optischen Signalen, eine durchsichtige Scheibe, die eine senkrecht zu einer Dickenabmessungsrichtung der Scheibe verlaufende Scheibenebene aufweist, eine Antriebseinrichtung, die mit der Scheibe antriebsverbunden ist, so dass die Antriebseinrichtung die Scheibe in deren Scheibenebene in Rotation versetzen kann, wobei der optische Sensor in einer vorbestimmten Position an einer parallel zur Scheibenebene verlaufenden Seite der Scheibe angeordnet ist, so dass der sensorische Bereich des optischen Sensors von der Scheibe abgedeckt ist und ein Rotieren der Scheibe möglich ist, und Befestigungsmittel, mittels derer der optische Sensor in seiner Position gehalten ist und die Optosensor-Einrichtung an der Druckmaschine befestigt ist.

Wenn im Betrieb der Druckmaschine die durchsichtige Scheibe der Optosensor-Einrichtung in Rotation ist, wird jeglicher Schmutz durch die an der Scheibe auftretenden Fliehkräfte von der Oberfläche der Scheibe entfernt, so dass der sensorische Bereich des optischen Sensors stets freie Sicht auf die jeweils abzutastende Stelle hat.

Damit wird eine sichere Funktion der Optosensor-Einrichtung gewährleistet und werden auf einer Verschmutzung des optischen Sensors basierende Funktionsstörungen der Druckmaschine sicher vermieden.

Ferner kann durch die erfindungsgemäße Lösung die turnusmäßige Wartung der optischen Sensoren bzw. Optosensor-Einrichtungen entfallen, wobei deren zuverlässiges Funktionieren auch in verschmutzungsanfälligen Zonen der Druckmaschine sichergestellt ist. Dadurch kann eine Reduzierung der Betriebskosten der Druckmaschine erreicht werden.

Die Scheibe ist in ihrer Dickenabmessungsrichtung gesehen kreisrund ausgebildet. Mit anderen Worten ist die Scheibe ein flaches, durchsichtiges Teil mit einem schmalen Umfangsrand und kreisförmigen Seitenflächen.

Damit wird insbesondere ein ruhiger Rotationslauf der Scheibe gewährleistet, wodurch auf der Rotation der Scheibe basierende Schwingungen reduziert oder sogar vermieden werden.

Gemäß der Erfindung wird die Scheibe in einem solchen Drehzahlbereich drehangetrieben, dass einerseits Verschmutzungen sicher von der Oberfläche der Scheibe entfernt werden und andererseits keine zu großen Materialbeanspruchungen und Schwingungen auftreten. In diesem Zusammenhang kommt es darauf an, dass die Scheibe mit einer ausreichend hohen Drehzahl rotiert, so dass durch die dabei auftretende Fliehkraft Verschmutzungen von der Oberfläche der Scheibe entfernt werden. Gemäß der Erfindung kann die Antriebseinrichtung so zum Drehantreiben der Scheibe eingerichtet sein, dass die Scheibe mit einer Drehzahl von mindestens 200 U/min bis etwa 3000 U/min, insbesondere etwa 1800 U/min bis etwa 2100 U/min rotiert. Der zu wählende Drehzahlbereich kann dabei von den zu erwartenden Verschmutzungen und der Größe bzw. dem Durchmesser der Scheibe abhängen.

Gemäß einer Weiterbildung der Erfindung ist die Scheibe aus Glas oder Polycarbonat hergestellt. Da Glas und Polycarbonat außerordentlich kratzfest sind, kann mit dieser Ausgestaltung einem Zerkratzen der Oberfläche und damit einer Verschlechterung der Transparenz der Scheibe entgegengewirkt werden, wodurch eine lange Nutzungsdauer der Scheibe gewährleistet werden kann.

Gemäß einer Weiterbildung de Erfindung weist die Scheibe in ihrer ScheibenEbene eine Mittelposition auf, an der die Antriebseinrichtung mit der Scheibe antriebsverbunden ist.

Auch diese Ausgestaltung der Erfindung trägt zum Reduzieren bzw. Vermeiden von durch die Rotation der Scheibe induzierten Schwingungen bei.

Gemäß einer Weiterbildung der Erfindung weist die Antriebseinrichtung eine Antriebswelle auf, welche zum Drehantreiben mit der Scheibe verbunden ist.

Gemäß einer Weiterbildung der Erfindung ist die Antriebseinrichtung derart angeordnet, dass die Antriebswelle zur Mittelposition der Scheibe fluchtet.

Bei dieser Ausgestaltung der Erfindung kann die Antriebseinrichtung platzsparend innerhalb der Umfangsabmessungen der Scheibe angeordnet sein und kann ohne Zwischenglieder, wie Zahnräder oder Antriebsriemen, direkt mit der Scheibe verbunden sein.

Zu diesem Zweck weist die Scheibe an der Mittelposition beispielsweise eine Bohrung auf, in die die Antriebswelle z.B. über ein Gummi- oder ein Kunststofflager drehfest eingepasst ist, so dass die Antriebswelle die Scheibe beim Drehen mitnehmen kann.

Gemäß einer alternativen Weiterbildung der Erfindung ist die Antriebseinrichtung derart angeordnet, dass sich die Antriebswelle außerhalb der Mittelposition der Scheibe befindet.

Bei dieser Ausgestaltung der Erfindung kann die Antriebseinrichtung innerhalb oder außerhalb der Umfangsabmessungen der Scheibe angeordnet sein und kann mittels Zwischengliedern, wie Zahnrädern oder Antriebsriemen, mit der Scheibe verbunden sein. Zu diesem Zweck kann an der Mittelposition der Scheibe und an der Antriebswelle z.B. jeweils eine Riemenscheibe vorgesehen sein, wobei die beiden Riemenscheiben mittels eines Reibriemens oder eines Zahnriemens miteinander antriebsverbunden sind. Dies kann beispielsweise vorteilhaft sein, wenn eine Antriebseinrichtung für mehrer Scheiben verwendet werden soll oder wenn die Antriebseinrichtung aus konstruktiven Gründen so anzuordnen ist.

In diesem Zusammenhang ist zu bemerken, dass die Antriebseinrichtung auch beispielsweise über ein an die Antriebswelle montiertes Reibrad direkt auf den Umfang der Scheibe wirken kann und diese drehantreiben kann.

Gemäß einer Weiterbildung der Erfindung ist die Antriebseinrichtung von einem Elektromotor gebildet.

Dies hat den Vorteil, dass die Antriebseinrichtung in einfacher Weise in die Steuerung der Druckmaschine einbindbar ist. Ferner verursachen Elektromotoren kaum eigenen Schmutz und sind preiswert und zuverlässig. Gemäß einer Ausführungsform der Erfindung sind der optische Sensor und der Elektromotor mit einer in die Druckmaschine integrierten Steuervorrichtung gekoppelt, über welche der optische Sensor und der Elektromotor mit Strom versorgt werden und Signale des optischen Sensors ausgewertet bzw. verarbeitet werden. In diesem Zusammenhang sind natürlich auch andere Antriebseinrichtungen, wie z.B. Druckluftmotoren oder Hydraulikmotoren, denkbar.

Gemäß einer Weiterbildung der Erfindung ist zwischen der Scheibe und dem optischen Sensor ein Dichtungselement vorgesehen, das an dem optischen Sensor befestigt ist. Das Dichtungselement kann beispielsweise aus Gummi oder Silikon oder PTFE (Polytetrafluorethylen) hergestellt sein.

Mit dem Dichtungselement kann der optische Sensor bzw. ein Raum zwischen Sensor und Scheibe zusätzlich seitlich gekapselt werden, wodurch ein eventuelles Eindringen von Schmutz zwischen Sensor und Scheibe vermieden wird. Wenn das Dichtungselement z.B. aus PTFE hergestellt ist, kann dieses leicht berührend gleitend an der Scheibe anliegen, wodurch das Eindringen von Schmutz in den Raum zwischen Sensor und Scheibe noch sicherer vermieden wird.

Gemäß einer Weiterbildung der Erfindung ist das Dichtungselement trichterförmig ausgebildet. Mit anderen Worten weitet sich das Dichtungselement in einer Richtung von dem Sensor aus zur Scheibe hin trichterförmig auf.

Dadurch wird dem optischen Sensor ein größerer Sichtbereich bzw. Einfall- und/oder Austrittsbereich für Licht und/oder Strahlung bereitgestellt.

Zusammenfassend kann gemäß der Erfindung die Optik des Sensors trichterförmig gekapselt sein, wobei am Aus- bzw. Eintritt der Lichtstrahlen eine Glasscheibe mit hoher Drehzahl (wie beim Schlechtwetterfenster auf Schiffen) rotiert. Schmutzteilchen werden durch die hohen Fliehkräfte von der Schutzscheibe entfernt und die Optik hat immer freie Sicht auf die abzutastende Stelle. Dadurch wird zum Beispiel die Erfassung von Druckprodukten von unterhalb des Auslagebandes eines Falzapparates aus möglich.

Im Folgenden wird die Erfindung anhand einer Ausführungsform und unter Bezugnahme auf die beigefügten Figuren detaillierter beschrieben.

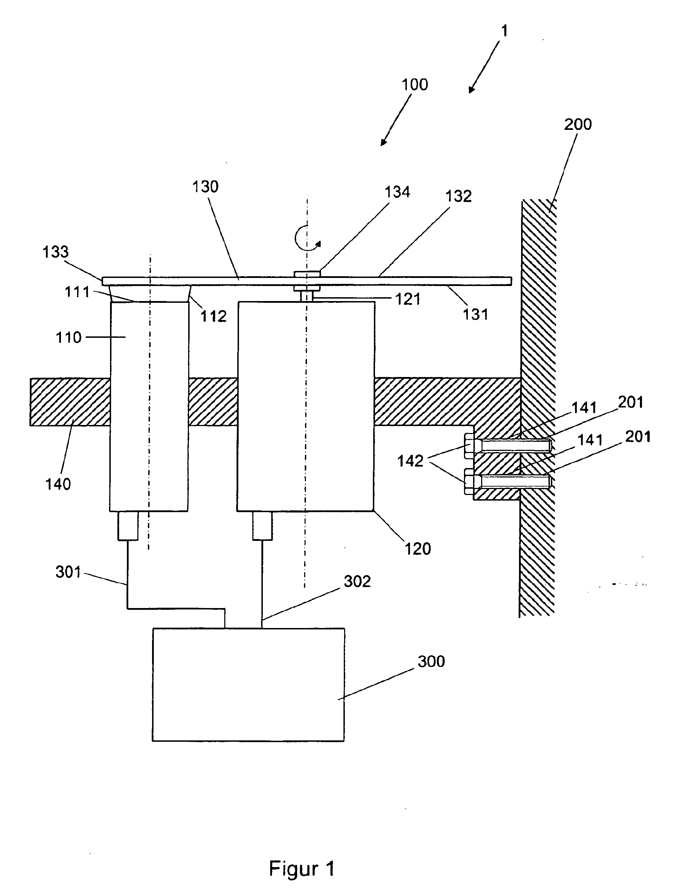

- Fig.1: zeigt schematisch die Optosensor-Einrichtung einer Druckmaschine gemäß einer Ausführungsform der Erfindung.

Nun wird unter Bezugnahme auf Fig.1 eine Ausführungsform der Erfindung detailliert beschrieben.

Wie in Fig.1 gezeigt, weist eine nicht vollständig dargestellte Rollenrotationsdruckmaschine (im Folgenden kurz Druckmaschine) 1 gemäß einer Ausführungsform der Erfindung eine Optosensor-Einrichtung 100 auf zum Überwachen des Betriebs der Druckmaschine 1. Gemäß dieser Ausführungsform ist die Optosensor-Einrichtung 100 unterhalb eines Auslagebandes eines nicht dargestellten Falzapparates der Druckmaschine 1 an einen Montageabschnitt 200 des Falzapparates montiert. Gemäß dieser Ausführungsform der Erfindung dient hier die Optosensor-Einrichtung 100 zum Erfassen der über das Auslageband transportierten Druckprodukte.

Wie in Fig.1 gezeigt, weist die Optosensor-Einrichtung 100 einen optischen Sensor 110 mit einem sensorischen Bereich 111 auf zum Passieren von optischen Signalen bzw. zum Aussenden von Licht aus dem Sensor 110 und zum Erfassen von Licht, das von einem nicht dargestellten, mit dem ausgesendeten Licht angestrahlten Druckprodukt auf dem Auslageband des Falzapparates zu dem Sensor 110 hin rückreflektiert wird, wenn ein Druckprodukt in den Lichtpfad tritt. Mit anderen Worten ist der optische Sensor 110 als Reflexlichttaster ausgebildet, der zur direkten Detektion von Druckprodukten dient. In einem Gehäuse des optischen Sensors 110 sind ein Sender und ein Empfänger (nicht dargestellt) untergebracht. Der Sender strahlt über den sensorischen Bereich 111 Licht aus, das von dem zu erkennenden Druckprodukt reflektiert und vom Empfänger über den sensorischen Bereich 111 erfasst wird. Ausgewertet wird die Reflexion des Lichtes von einem Druckprodukt, weshalb zusätzliche Funktionskomponenten (wie Reflektoren bei Reflexlichtschranken) für den Betrieb des Reflexlichttasters nicht erforderlich sind.

Die Optosensor-Einrichtung 100 weist ferner eine als Elektromotor 120 ausgebildete Antriebseinrichtung und eine durchsichtige kreisrunde Scheibe 130 auf.

Die Scheibe 130 ist ein flaches durchsichtiges Teil mit kreisförmigen Seitenflächen 131, 132 und einem schmalen Umfangsrand 133. Ein Abstand zwischen den Seitenflächen 131, 132 bildet die Dickenabmessung der Scheibe, welche gemäß dieser Ausführungsform 5 mm beträgt. Senkrecht zur Dickenabmessungsrichtung der Scheibe 130 verläuft eine Scheibenebene, zu der die Seitenflächen 131, 132 parallel sind. Gemäß dieser Ausführungsform hat die Scheibe 130 einen Durchmesser von 200 mm und ist aus gehärtetem Glas hergestellt.

In eine an einer Mittelposition der Scheibe 130 befindliche Durchgangsbohrung ist drehfest ein Kunststofflager 134 eingepasst, über welches die Scheibe 130 mit einer Antriebswelle 121 des Elektromotors 120 gekuppelt bzw. antriebsverbunden ist, so dass der Elektromotor 120 die Scheibe 130 in deren Scheibenebene in Rotation versetzen kann. Mit anderen Worten ist der Elektromotor 120 derart angeordnet, dass dessen Antriebswelle 121 zur Mittelposition der Scheibe 130 fluchtet.

Der optische Sensor 110 ist in einer vorbestimmten Position an der dem Sensor 110 zugewandten Seitenfläche 131 der Scheibe 130 angeordnet, so dass der sensorische Bereich 111 des optischen Sensors 110 von der Scheibe 130 abgedeckt ist und ein Rotieren der Scheibe 130 möglich ist.

Zu diesem Zweck weist die Optosensor-Einrichtung 100 ferner Befestigungsmittel in Form eines Haltewinkels 140 (in Fig.1 geschnitten dargestellt) auf, an dem der optische Sensor 110 und der Elektromotor 120 befestigt sind und der an dem Montageabschnitt 200 des Falzapparates befestigt ist, so dass die Optosensor-Einrichtung 100 an der Druckmaschine 1 befestigt ist. Mit anderen Worten weist der Haltewinkel 140 Ausnehmungen (in Fig.1 von dem Sensor 110 und dem Elektromotor 120 verdeckt) auf, in denen der optische Sensor 110 und der Elektromotor mittels geeigneter Klemmmittel arretiert sind. Der Haltewinkel weist an einem abgewinkelten Ende zwei Durchgangsbohrungen 141 auf, durch die zwei Schrauben 142 hindurchgesteckt sind, wobei die Schrauben 142 in jeweilige Gewindelöcher 201 in dem Montageabschnitt 200 eingeschraubt sind.

Zwischen der Scheibe 130 und dem optischen Sensor 110 ist ein Dichtungselement 112 vorgesehen, welches an dem optischen Sensor 110 befestigt ist und welches aus PTFE (Polytetrafluorethylen) hergestellt ist. Das Dichtungselement 112 ist trichterförmig ausgebildet, wobei es an die Umfangskontur des Sensors 110 angepasst ist und sich in einer Richtung von dem Sensor 110 aus zur Scheibe 130 hin trichterförmig aufweitet. Das Dichtungselement 112 verkapselt somit den optischen Sensor 110 bzw. einen Raum zwischen optischem Sensor 110 und Scheibe 130 seitlich rundherum, wodurch ein eventuelles Eindringen von Schmutz zwischen optischem Sensor 110 und Scheibe 130 vermieden wird.

Durch den geringen Reibungskoeffizienten von PTFE kann gemäß dieser Ausführungsform der Erfindung das Dichtungselement 112 leicht berührend gleitend an der Seitenfläche 131 der Scheibe 130 anliegen, wodurch das Eindringen von Schmutz in den Raum zwischen Sensor und Scheibe noch sicherer vermieden wird.

Gemäß dieser Ausführungsform der Erfindung ist der Elektromotor 120 derart zum Drehantreiben der Scheibe 130 eingerichtet, dass die Scheibe 130 mit einer Drehzahl von etwa 1800 U/min bis etwa 2100 U/min rotiert. Der Elektromotor 120 gemäß dieser Ausführungsform ist beispielsweise ein Gleichstrommotor mit beispielsweise einer Nennspannung von 12V.

Gemäß dieser Ausführungsform der Erfindung sind der optische Sensor 110 und der Elektromotor 120 über jeweilige elektrische Verbindungsleitungen 301 und 302 mit einer in die Druckmaschine 1 integrierten Steuervorrichtung 300 gekoppelt, über welche der optische Sensor 110 und der Elektromotor 120 mit Strom versorgt werden und Erfassungssignale des optischen Sensors 110 ausgewertet bzw. verarbeitet werden.

Im Betrieb der Druckmaschine 1 wird der Elektromotor 120 von der Steuervorrichtung 300 eingeschaltet und versetzt die Scheibe 130 in Rotation. Dadurch wird jeglicher Schmutz, wie beispielsweise Papierstaub, durch die an der Scheibe 130 auftretenden Fliehkräfte von den Seitenflächen 131, 132 der Scheibe 130 entfernt, so dass der sensorische Bereich 111 des optischen Sensors 110 stets freie Sicht auf die zu erfassenden Druckprodukte hat.

Damit wird eine sichere Funktion der Optosensor-Einrichtung 100 gewährleistet und werden auf einer Verschmutzung des optischen Sensors 110 basierende Funktionsstörungen der Druckmaschine 1 sicher vermieden.

Ferner kann durch die erfindungsgemäße Lösung eine turnusmäßige Wartung des optischen Sensoren 110 bzw. der Optosensor-Einrichtung 100 entfallen. Dadurch kann eine Reduzierung der Betriebskosten der Druckmaschine 1 erreicht werden.

### Bezugszeichenliste

- 1: Druckmaschine
- 110: optischer Sensor
- 111: sensorischer Bereich
- 112: Dichtungselement
- 120: Antriebseinrichtung (Elektromotor)
- 121: Antriebswelle
- 130: Scheibe
- 131: Seitenfläche
- 132: Seitenfläche
- 133: Umfangsrand
- 134: Kunststofflager
- 140: Befestigungsmittel (Haltewinkel)
- 141: Durchgangsbohrungen
- 142: Schrauben
- 200: Montageabschnitt
- 201: Gewindelöcher
- 300: Steuervorrichtung
- 301: Verbindungsleitung
- 302: Verbindungsleitung

## Patentansprüche

1. Druckmaschine (1) mit einer Optosensor-Einrichtung (100) zum Überwachen des Betriebs der Druckmaschine (1), wobei die Optosensor-Einrichtung (100) aufweist:
- einen optischen Sensor (110) mit einem sensorischen Bereich (111) zum Passieren von optischen Signalen,
- eine durchsichtige Scheibe (130), die eine senkrecht zu einer Dickenabmessungseinrichtung der Scheibe (130) verlaufende Scheibenebene aufweist,
- eine Antriebseinrichtung (120), die mit der Scheibe (130) antriebsverbunden ist, so dass die Antriebseinrichtung (120) die Scheibe (130) in deren Scheibenebene in Rotation versetzen kann,
- wobei der optische Sensor (110) in einer vorbestimmten Position an einer parallel zur Scheibenebene verlaufenden Seite (131) der Scheibe (130) angeordnet ist, so dass der sensorische Bereich (111) des optischen Sensors (110) von der Scheibe (130) abgedeckt ist und ein Rotieren der Scheibe möglich ist, und
- Befestigungsmittel (140, 141, 142, 201), mittels derer der optische Sensor in seiner Position gehalten ist und die Optosensor-Einrichtung (100) an der Druckmaschine (1) befestigt ist, wobei
die Antriebseinrichtung (120) eingerichtet ist zum Drehzahlantreiben der Scheibe (130), so dass die Scheibe (130) mit einer Drehzahl von mindestens 200 U/min bis etwa 3000 U/min, insbesondere etwa 1800 U/min bis etwa 2100 U/min rotiert.

2. Druckmaschine (1) gemäß Anspruch 1, wobei die Scheibe (130) in ihrer Scheibenebene eine Mittelposition aufweist, an der die Antriebseinrichtung (120) mit der Scheibe (130) antriebsverbunden ist.

3. Druckmaschine (1) gemäß Anspruch 2, wobei die Antriebseinrichtung (120) eine Antriebswelle (121) aufweist, welche zum Drehantreiben mit der Scheibe verbunden ist.

4. Druckmaschine (1) gemäß Anspruch 3, wobei die Antriebseinrichtung (120) derart angeordnet ist, dass die Antriebswelle (121) zur Mittelposition der Scheibe fluchtet.

5. Druckmaschine (1) gemäß Anspruch 3, wobei die Antriebseinrichtung (120) derart angeordnet ist, dass sich die Antriebswelle (121) außerhalb der Mittelposition der Scheibe (130) befindet.

6. Druckmaschine (1) gemäß einem der Ansprüche 1 bis 5, wobei die Antriebseinrichtung (120) von einem Elektromotor oder Druckluftmotor oder Hydraulikmotor gebildet ist.

7. Druckmaschine (1) gemäß einem der Ansprüche 1 bis 6, wobei zwischen der Scheibe (130) und dem optischen Sensor (110) ein Dichtungselement (112) vorgesehen ist, das an dem optischen Sensor (110) befestigt ist.

8. Druckmaschine (1) gemäß Anspruch 7, wobei das Dichtungselement (112) trichterförmig ausgebildet ist.

9. Druckmaschine (1) gemäß einem der Ansprüche 7 bis 8, wobei das Dichtungselement (112) aus Gummi oder Silikon oder PTFE hergestellt ist.

10. Druckmaschine (1) gemäß Anspruch 1, wobei die Scheibe (130) aus Glas oder Polycarbonat hergestellt ist.

## Claims

1. A printing press (1) with an optosensor device (100) for monitoring the operation of the printing press (1), whereby the optosensor device (100) comprises:
- an optical sensor (110) with a sensoric area (111) for the passing of optical signals,
- a transparent screen (130) having a screen plane running perpendicularly to a thickness measuring device of the screen (130),
- a driving device (120), which is drive-connected to the screen (130) so that the driving device (120) can put the screen (130) in rotation in its screen plane, whereby
- the optical sensor (110) is arranged in a predetermined position on a side (131) of the screen (130) running parallel to the screen plane, so that the sensoric area (111) of the optical sensor (110) is covered by the screen (130) and rotating of the screen is possible, and
- fastening means (140, 141, 142, 201), by means of which the optical sensor is held in its position and the optosensor device (100) is fastened to the printing press (1), whereby the driving device (120) is arranged for the rotational speed driving of the screen (130), so that the screen (130) rotates with a rotational speed of at least 200rpm to approximately 3000rpm, more preferably between 1800rpm to approximately 2100rpm.

2. A printing press (1) according to Claim 1, whereby the screen (130) in its screen plane has a middle position, in which the driving device (120) is drive-connected to the screen (130).

3. A printing press (1) according to Claim 2, whereby the driving device (120) comprises a drive shaft (121), for which the rotary driving is connected to the screen.

4. A printing press (1) according to Claim 3, whereby the driving device (120) is arranged in such a manner that the drive shaft (121) is aligned with the middle position of the screen.

5. A printing press (1) according to Claim 3, whereby the driving device (120) is arranged in such a manner that the drive shaft (121) is located outside the middle position of the screen (130).

6. A printing press (1) according to any one of the Claims 1 to 5, whereby the driving device (120) is formed by an electric motor or compressed-air motor or hydraulic motor.

7. A printing press (1) according to any one of the Claims 1 to 6, whereby between the screen (130) and the optical sensor (110) a sealing element (112) is provided, which is fastened to the optical sensor (110).

8. A printing press (1) according to Claim 7, whereby the sealing element (112) is of a funnel-shaped design.

9. A printing press (1) according to any one of the Claims 7 to 8, whereby the sealing element (112) is produced of rubber or silicone or PTFE.

10. A printing press (1) according to Claim 1, whereby the screen (130) is made of glass or polycarbonate.

## Revendications

1. Presse d'imprimerie (1) comportant une installation à capteur optique (100) pour surveiller le fonctionnement de la presse (1), l'installation de capteur optique (100) comprenant :
- un capteur optique (110) ayant une zone de capteur (111) pour le passage de signaux optiques,
- un disque transparent (130) ayant un plan perpendiculaire à une installation de mesure d'épaisseur du disque (130),
- une installation d'entraînement (120) coopérant dans le sens de l'entraînement avec le disque (130) pour que l'installation d'entraînement (120) puisse mettre en rotation le disque (130) dans son plan,
- le capteur optique (110) étant installé dans une position prédéterminée sur un côté (131) du disque (130) parallèle au plan du disque pour que la zone de capteur (111) du capteur optique (110) soit couverte par le disque (130) et permette la rotation du disque, et
- un moyen de fixation (140, 141, 142, 201) par lequel le capteur optique est maintenu en position et l'installation de capteur optique (100) est fixée à la presse d'imprimerie (1),
- l'installation d'entraînement (120) entraînant en rotation le disque (130) de façon que le disque (130) tourne à une vitesse de rotation d'au moins 200 T/min jusqu'à environ 3000 T/min et notamment entre environ 1800 T/min jusqu'à environ 2100 T/min.

2. Presse d'imprimerie (1) selon la revendication 1,
dans laquelle
le disque (130) a dans son plan une position médiane au niveau de laquelle, l'installation d'entraînement (120) est reliée au disque (130) dans le sens de l'entraînement.

3. Presse d'imprimerie (1) selon la revendication 2,
dans laquelle
l'installation d'entraînement (120) comporte un arbre d'entraînement (121) relié au disque dans le sens de l'entraînement en rotation.

4. Presse d'imprimerie (1) selon la revendication 3,
dans laquelle
l'installation d'entraînement (120) est montée pour que l'arbre d'entraînement (121) soit aligné sur la position centrale du disque.

5. Presse d'imprimerie (1) selon la revendication 3,
dans laquelle
l'installation d'entraînement (120) est installée pour que l'arbre d'entraînement (121) se trouve au-delà de la position centrale du disque (130).

6. Presse d'imprimerie (1) selon l'une des revendications 1 à 5,
dans laquelle
l'installation d'entraînement (120) est constituée par un moteur électrique ou un moteur à air comprimé ou un moteur hydraulique.

7. Presse d'imprimerie (1) selon l'une des revendications 1 à 6,
dans laquelle
un élément d'étanchéité (112) fixé sur le capteur optique (110) est prévu entre le disque (130) et le capteur optique (110).

8. Presse d'imprimerie (1) selon la revendication 7,
dans laquelle
l'élément d'étanchéité (112) a une forme d'entonnoir.

9. Presse d'imprimerie (1) selon l'une des revendications 7 à 8,
dans laquelle
l'élément d'étanchéité (112) est en caoutchouc ou en silicone ou en PTFE.

10. Presse d'imprimerie (1) selon la revendication 1,
dans laquelle
le disque (130) est en verre ou en polycarbonate.
